# EUROPEAN PATENT SPECIFICATION

(11) **EP 1 302 063 B1**
(45) Date of publication and mention of the grant of the patent: **27.07.2005**
(21) Application number: 01953950.1
(22) Date of filing: 22.05.2001
(51) Int. Cl.: H04M 11/00

(54) **MULTI-FUNCTION APPARATUS FOR REMOTELY SIGNALLING, CONTROLLING AND TRIGGERING EVENTS THROUGH THE TELEPHONE NETWORK**
MULTIFUNKTIONELLE VORRICHTUNG ZUR ENTFERNTEN SIGNALISIERUNG, STEUERUNG UND AUSLÖSUNG VON EREIGNISSEN DURCH DAS TELEFONNETZ
APPAREIL A FONCTIONS MULTIPLES PERMETTANT DE SIGNALER, CONTROLER ET DECLENCHER DES EVENEMENTS A DISTANCE VIA LE RESEAU TELEPHONIQUE

(30) Priority: 21.07.2000 IT PN000044
(43) Date of publication of application: 16.04.2003
(73) Proprietor: Elet3 S.R.L., 38061 Ala (IT)
(72) Inventor: SALVATERRA, Mariano, I-38060 Nomi (IT); LORENZI, Marco, I-38068 Roveredo (IT)
(74) Representative: Ponchiroli, Simone
(86) International application number: PCT/EP2001/005856
(87) International publication number: WO 2002/009404

(56) References cited:
- EP-A- 0 920 210
- WO-A-99/60769
- GB-A- 2 335 110

## Description

The present invention refers to a specific apparatus and a related method for the utilization of the portable or cellular telephone apparatus, to the purpose of controlling and, possibly, triggering, ie. actuating the functions of remotely located control and actuation appliances and devices; in particular, the present invention is aimed in a preferred manner at giving the owner of a cellular phone the possibility of performing with his/her own telephone apparatus a plurality of operations that are currently carried out with the use of other specially intended devices.

To state it more precisely, the apparatus of the above cited kind enables all of the traditional functions of a complete general alarm system, including for instance anti-intrusion security systems in the home, in the working environment, in the holiday house, and in the various mobile means that one may possess, such as for instance the car, the camper, the boat and the like, as well as fire prevention and alarm systems and systems for the remote control of specific functions performed by remotely located servo or slave controls, such as locking and unlocking or opening and closing doors, starting lighting and space heating systems and, in general, activating home or building management systems, with the sole use of one's own cellular phone.

Although in the following description, for reasons of greater descriptive simplicity, reference is made to a telecommunication apparatus adapted to interface with a specific telephone apparatus, in particular connected to a mobile telephone network, it shall be appreciated that said apparatus is to be understood as an apparatus that may generally interface, albeit with some limitations in its use, also with any other telephone apparatus connected to a stationary telephone network, provided that it is capable, ie. enabled to interface with such an apparatus.

From the disclosure in US 5,580,180 filed by B. Hess as the inventor and assigned to Tattletale Portable Alarm Systems, the existence is known of a particular portable device that is adapted to send signals, through a control channel of a cellular phone, to a remote switching office.

The functions that can be performed by such a device are substantially of the same type as the ones mentioned above; in particular, there is no interaction between the device and the external actuators (the device itself is substantially an automatic telephone dialler); however, the need is readily apparent for exactly a further portable device to be provided, which, as such, turns undoubtedly out to be of hindrance and to put definite limitations to the user, is surely not so convenient to carry along by its user considering the functions that it is expected to perform, and has of course a certainly not negligible cost.

From the disclosure in US 5,861,804 assigned to Backson, Inc., CA., the possibility is further known for a plurality of alarm and signalling sensors of various types to be connected via a radio-frequency device to a computer, preferably a personal computer. The latter is so arranged as to be enabled to generate programmed responses to the signals it receives, as well as to transmit via a radio-frequency device corresponding coded signals to other computers or a cellular phone.

However, such a possibility has a twofold drawback in that it requires both the availability of a computer, which is not so frequently to be found in homes after all, and a special software to be used in connection therewith. A further major drawback of this solution lies in the fact that the cellular phone can only operate and act as a receiving station for signals/messages, since it is not actually enabled to transmit signals and, as a result, commands to said personal computer. Such a circumstance puts therefore considerable limitations to the actual usefulness of the invention, since the possibility is totally excluded for appropriate commands to be sent at the desired moment to activate the desired functions of selectively pre-selected actuators.

From the disclosure in US 5,926,103 a solution is known which essentially blends the solutions described in the two above cited patents. In particular, this patent describes a portable apparatus that is specifically designed to communicate and to receive signals from a nearby located transceiver, which in turn connects to a remote receiver adapted to automatically send appropriate signals and data to final receiving stations for information relating to security to be adequately transmitted and used.

Such a solution is only seemingly practical and convenient , since in point of facts it also requires a special portable apparatus further to the presence of an additional transceiver located nearby. On top of that, only the transmission of alarm signals to remote stations is provided, whereas the opportunity and the feasibility of generating command and control signals aimed at triggering or operating a plurality of different actuators located at sites differing from the one constituting the destination of the signals concerning security are by no means taken into account or considered.

Another solution is disclosed in EP 920 210.

In this case a system is disclosed which allows remote visual monitoring of the conditions of a first site, by a user at a second site via a standard telephone line, one or more wireless telephones, or an ISDN telecommunications link.

The system combines the features of three devices: a sensor-responsive automatic telephone notification device, an automatic telephone response device, and a touch-tone phone remote control device or voice actuated remote device. The system allows a user at a remote location to control electrical devices at a first location in response to the conditions of sensors at the first location and in response to a video display of the first location.

A last solution is then disclosed in WO 99/60769.

This solution is based on the possibility of expanding the data carrying capacity of a forward control channel of a cellular mobile radiotelephone system, in order to use it as a link between a monitoring site and a monitored site.

The system utilizes data fields that would otherwise be unused in a conventional data message system, to allow an operation identifier being transmitted to a data reporting device.

An external device connected to the data reporting device can be caused to perform an operation defined by the operation identifier transmitted by the user, and that can be chosen from a list of available operations.

Based on the above considerations, it therefore is a main purpose of the present invention to provide a data reception and transmission and command transmission apparatus subdivided into a mobile command station and a stationary apparatus, in which the mobile station is constituted by a normal portable (cellular) telephone apparatus, while the stationary portion of the apparatus is made so as to be able to be connected selectively to both a plurality of actuators and a plurality of further pre-selected command or alarm stations. In particular, said stationary apparatus is adapted to receive appropriate signals from said command station, which consists of a preferably portable telephone apparatus, and to correspondingly activate said actuators; it is further adapted to also transmit to said cellular telephone apparatus, according to programmable modalities, a plurality of coded signals generated by appropriate sensors, transmitted to said stationary apparatus and re-transmitted by the latter to said portable telephone apparatus.

Furthermore, said apparatus must be easy to be both implemented and operated, with the use of materials that are readily available in the art and, therefore, generally low in their costs.

This aim, along with other features of the present invention, are reached in an apparatus that is implemented and operates in accordance with the modes and manners recited in the appended claims.

The present invention may take the form of a preferred, although not sole embodiment that is described in detail below by way of non-limiting example with reference to the accompanying drawings, in which:
- Figure 1 is a schematical symbolic view of an apparatus according to the present invention, along with the devices connected thereto;
- Figure 2 is a reference table illustrating the possible associations between the names of the users, the telephone numbers of the related telephone apparatuses, and the telephone numbers that can be dialled by such apparatuses;
- Figure 3 is a view illustrating an example of a matrix of association of said numbers of telephone apparatuses and the numbers that can be respectively dialled by the same apparatuses;
- Figure 4 is a view illustrating an example of association matrix with increased possibilities as far as the selection of codes and services is concerned;
- Figure 5 is a block diagram of the basic component parts/functions of an apparatus according to the present invention;
- Figure 6 is a block diagram illustrating in a simplified manner the flows of data and information relating to a particular mode of operation of the apparatus according to the present invention.

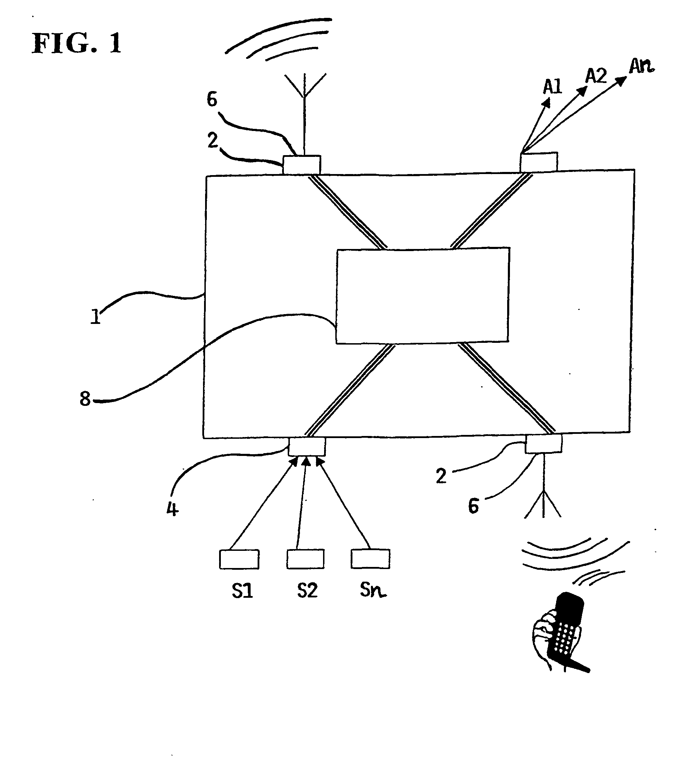

With reference to the above cited Figures, and particularly to Figure 1, an apparatus 1 according to the present invention is provided with:
- means 2 for receiving telephone signals coming from telephone apparatuses 3 of a mobile or stationary telephone network;
- input means or channels 4 for the signals coming from respective generator elements, such as in particular sensors S1, S2, Sn ...;
- output means or channels 5 adapted to send appropriate electric signals and/or commands to appropriate actuator members A1, A2, An ...;
- means 6 adapted to transmit telephone signals, which are processed and issued by appropriate processing means 8 included in said apparatus 1, to an external mobile or stationary telephone network, wherein said means 6 can be partly integrated with said receiving means 2, eg. the antenna.

Said sensors S1, S2, Sn are capable of being connected to a multiplicity of machines, services, pieces of equipment, installations or the like and, more in general, to utilities or user facilities of the most varied kind, in order to detect the state thereof.

As a non-limiting example, said utilities or facilities may include:
- devices for measuring the temperature of particular rooms, premises or the like;
- devices for detecting the state of operation of security/anti-burglary/anti-intrusion installations;
- devices for detecting the state of operation of pieces of equipment installed in residential or other kinds of buildings, such as heating boilers, watering installations, indoor or outdoor lighting, etc.

In particular, some of these sensors may be specially dedicated to the detection of not so much a pre-defined stable state, but rather a change in the state of operation of the facility or utility to which they are applied, so that they fall within the comprehensive category of the event signalling devices and, more particularly, of the alarm-state signalling devices.

Devices that belong to such a category include for instance:
- apparatuses for signalling fires in closed rooms or premises,
- anti-intrusion alarm signalling or presence detecting apparatuses (which may be provided also in different rooms or premises, as well as be located at sites that may also be quite far away, such as an office, a living unit, a boat, a holiday house up in the mountains, etc., as this will be illustrated and discussed in greater detail further on);
- gas detectors, etc.

In general, it may be stated that any kind of sensors, particularly if adapted to generate and issue a coded signal of an electric type, can be connected to the apparatus according to the present invention; the signal generated by such sensors may then be processed, compared with pre-determined levels/states associated to the same sensor, and used to produce a final signal to be sent, via an appropriate transmission channel (eg. radio frequency, wire, infrared rays) to said input means 4 of said apparatus, which uses such final signals directly. Or said signal so generated by said sensor may be sent directly, without any intermediate processing or conditioning, to said apparatus, which shall in this case be of course provided with all those means that are needed in view of enabling the desired result to be reached, ie. the final desired information to be produced in such a format as to be able to be then transmitted to one of the telephone networks to which said apparatus may be connected.

The optimum technical solutions to be adopted in accordance with existing constraints for processing and transmitting said signals are within the capabilities of those skilled in the art and therefore, owing to them not constituting a part of the present invention, they shall not be discussed in this description.

Said means 5 are in turn adapted to be connected to suitable actuators A1, A2, An, which may typically cover such functions as the ones listed below by mere way of example:
- servo controls to open and close, ie. lock and unlock the gate of a house, a factory, a shop, an office or the like;
- starting or turning off a central heating boiler;
- managing the burglar alarm system of a car or motor vehicle in general;
- switching on and off or managing an indoor/outdoor lighting installation.

Associated to the apparatus according to the present invention there are a plurality n of telephone apparatuses 3 connected to a public telephone network; although the present invention enables the greatest possible advantages to be derived therefrom if said telephone apparatuses are portable apparatuses, and therefore connected to a mobile telephone network, the apparatus according to the present invention can nevertheless operate, albeit with some limitations that will be duly pointed out further on, also in connection with telephone apparatuses of a stationary telephone network.

The processing means 8, which are included in the apparatus 1 and are associated to some memory means, are adapted to operate according to following modalities and manners:

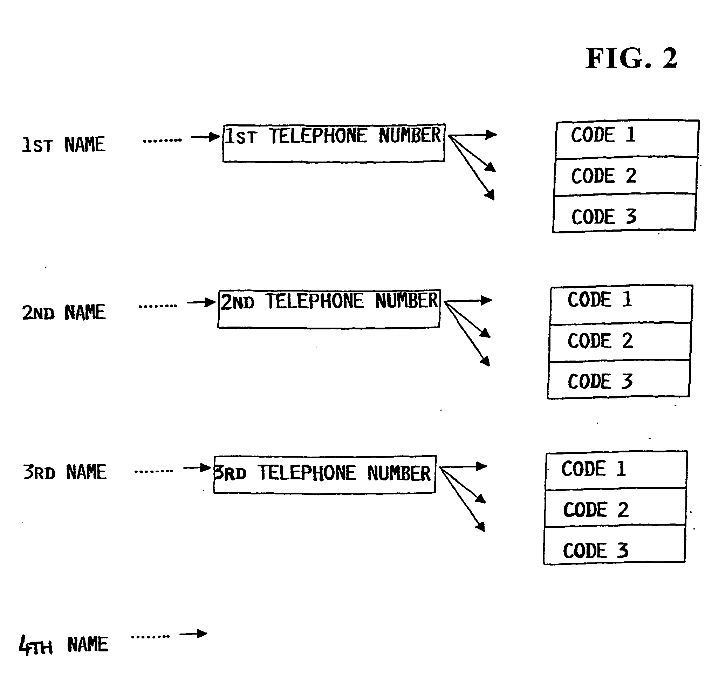

With reference to Figure 2, a plurality n of user names are defined, to which there are associated respective telephone identification numbers, ie. the telephone numbers of the telephone apparatuses which said user names, ie. users, are provided with or are allowed to accede to (a same and single person may of course have the use of several telephone apparatuses, either portable or stationary, but this has no influence at all, since only the respective telephone numbers, which are of course different, are stored in the memory means of the apparatus).

To each one of said telephone numbers there is associated a multiplicity of codes m, which are essentially different telephone numbers m that the user of each telephone apparatus may dial in order to connect him/herself with the apparatus according to the invention.

Said processing means are capable of recognizing, for each telephone call being received, the telephone number of the calling telephone apparatus (ie. one of the apparatuses n), as well as the code or telephone number (ie. one of the pre-defined ones m) sent by said telephone apparatus in order to be connected to the same apparatus of the invention.

They are also capable of pairing the two so identified telephone numbers, and comparing such a pairing with all pairings that have been pre-stored in the apparatus of the invention. Should it be acknowledged that the pairing relating to the telephone call being received is available among the pre-stored ones, then an enabling process is started automatically which, when terminated, enables, ie. authorizes the generation of a particular signal that is sent through a specific one of said output channels and is adapted to trigger the actuator which said output channel is connected to.

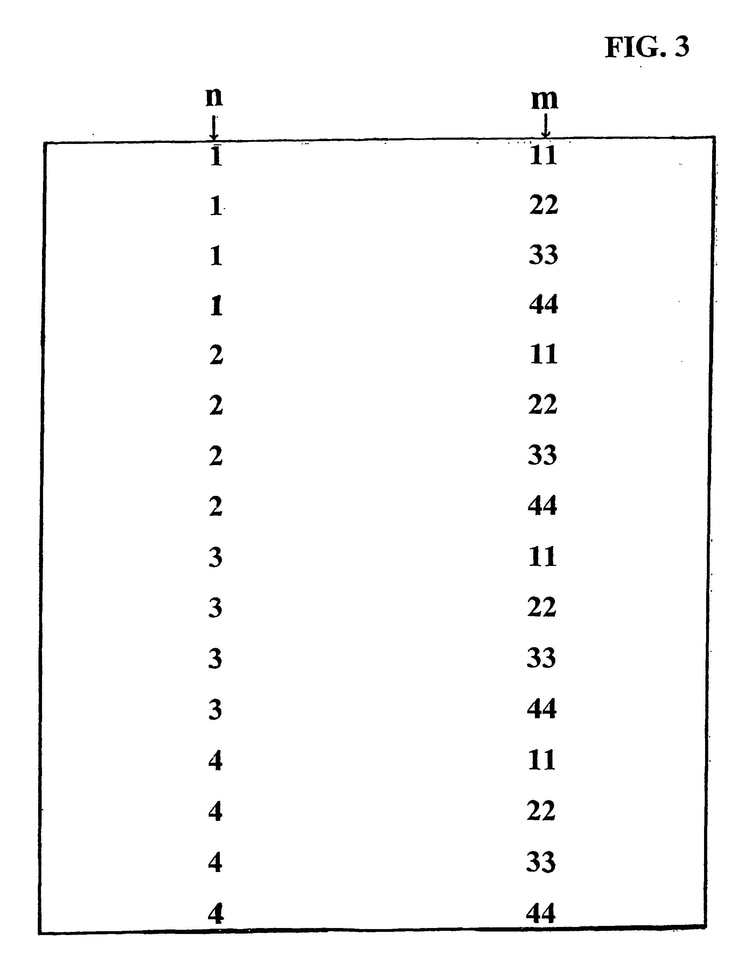

In synthesis, possibilities of for instance coupling with each other four different telephone apparatuses and related numbers, and three different telephone numbers or codes to which said apparatus of the invention may be called, are illustrated schematically in the matrix appearing in Figure 3, in which the first column represents the number of telephone apparatuses that can be connected to the apparatus of the invention (four apparatuses in this particular case), and the second column indicates the telephone numbers (in number of m and, in this particular case, amounting to four of them, ie. 11, 22, 33 and 44), which said telephone apparatuses can dial for connecting to the apparatus of the invention.

In substance, a number of associations among telephone numbers of the calling telephone apparatuses and the numbers that can be selected by the apparatuses themselves is possible, which is equal to the number of the lines of the matrix, ie. equal to 16 different associations in the example illustrated in Figure 3.

Furthermore, for each one of said m numbers of codes the apparatus of the invention enables a respective appropriate signal or command towards one of the actuators connected thereto, so as to activate the desired function.

Those skilled in the art will at this point be in a position as to quite clearly understand the logic behind the operation and the use of the apparatus of the invention: if, for instance, to the code 33 there is associated a process that is adapted to enable a triggering signal to be sent automatically to the actuator governing the ignition of a boiler, and if the user name 2 makes a call with the respective telephone apparatus and, in this call, dials the code 33, then the apparatus of the invention:
- identifies the telephone number of the calling telephone apparatus (number of the user name 2) and verifies whether such a number is included among the ones that are enabled to send commands;
- recognizes the code 33 as the code which a specific pre-determined command to be sent through a pre-determined channel corresponds to (eg. boiler ignition command, to be sent through the channel on which the boiler ignition actuator is installed); and
- then sends automatically such a command through said channel so as to enable the boiler to be ignited or turned on by the related actuator.

An incidental remark falls anyway due at this point: in fact, if the apparatus of the invention is capable of recognizing a call from an enabled telephone apparatus and, therefore, rejecting a call from a telephone apparatus whose telephone number is not included among the numbers that are enabled and duly stored in the memory devices, it is to be noticed that the subsequent recognition of a given association between:
- number of the calling telephone apparatus and
- number dialled by such a telephone apparatus for connecting to the apparatus of the invention
and, therefore, the processing and the activation of the corresponding signals take place without any opening of the telephone channel and, therefore, without any related cost practically arising and being charged to the user that makes such a call, ie. sends such a command.

Therefore, as this can be most readily understood, such a circumstance plays a fundamental role in contributing to the advantageousness of the use of the apparatus of the invention, which is actually capable of providing a number of additional remote control functions via telephone network at zero costs.

The described invention may be further improved by implementing the apparatus of the invention with following additional features: with reference to the matrix illustrated in Figure 3, the possibility can be provided for a determined one among the four codes available, ie. 11, 22, 33, 44 (second column) to be enabled to activate the corresponding actuations only in correspondence of pre-defined associations between pre-determined numbers of calling telephone apparatuses and pre-determined numbers of dialled codes, while obviously excluding all other available, but not enabled associations from such a possibility of giving rise to, ie. triggering commands.

In this manner, only pre-defined users are actually allowed to actuate, ie. trigger determined commands for pre-defined actuators and related services or user facilities, while excluding from such a possibility all and any other users.

Such an option may prove extremely useful and valuable if only the great number of possible advantageous uses are considered that may derive therefrom. It is in fact possible, for example, to allow a gardener to open the main gate of a property, but not to open the entrance doors of the closed premises, ie. the buildings; or, again, the same gardener may be also allowed to turn on the central heating boiler, but only by acting from outside the building. Similarly, it may be possible for surveillance or service personnel to be allowed to gain access to certain premises or rooms, but not to other restricted or reserved ones, and the like. It can be readily appreciated that there actually is a great number of existing options and possibilities, without any restraint whatsoever, at least in a line of principle., so that each user has the possibility of providing him/herself with an apparatus according to the invention, which is made and programmed in accordance with his/her own personal needs and requirements and particular situation.

The apparatus of the invention also offers further possibilities of operation that considerably expand the scope and utilization range thereof. Considering the situation now existing on the marketplace, in which the companies running the so-called GSM mobile telephone networks allow a user to be capable of being reached by a telephone call from a telephone apparatus included in a mobile or a stationary telephone network with three numbers only (ie, a number relating to the phone, ie. spoken message, one relating to a facsimile message, and a third one relating to a transmission of data), it is readily apparent that such a restraint might well affect the utilization of the apparatus of the invention to a considerable extent, since a telephone apparatus can in this way practically transmit and activate up to a maximum of three messages/commands.

In order to overcome such a drawback, the telephone number relating to the transmission of the spoken message can be advantageously used to convey therewith a great number of additional information to be used to either transmit further commands to respective actuators (of course, upon such additional information having been appropriately processed and enabled, ie. authorized in the afore described manner) or to modify the enabled numbers in the memory means, as this will be explained in greater detail further on.

It is in fact possible for a matrix to be defined for the association of telephone numbers and call codes, in which the particular call code, corresponding to the transmission of spoken messages, eg. the code 33, allows, when dialled, transmitted and enabled, a further quantity of codifications to be transmitted following the code itself having been so dialled.

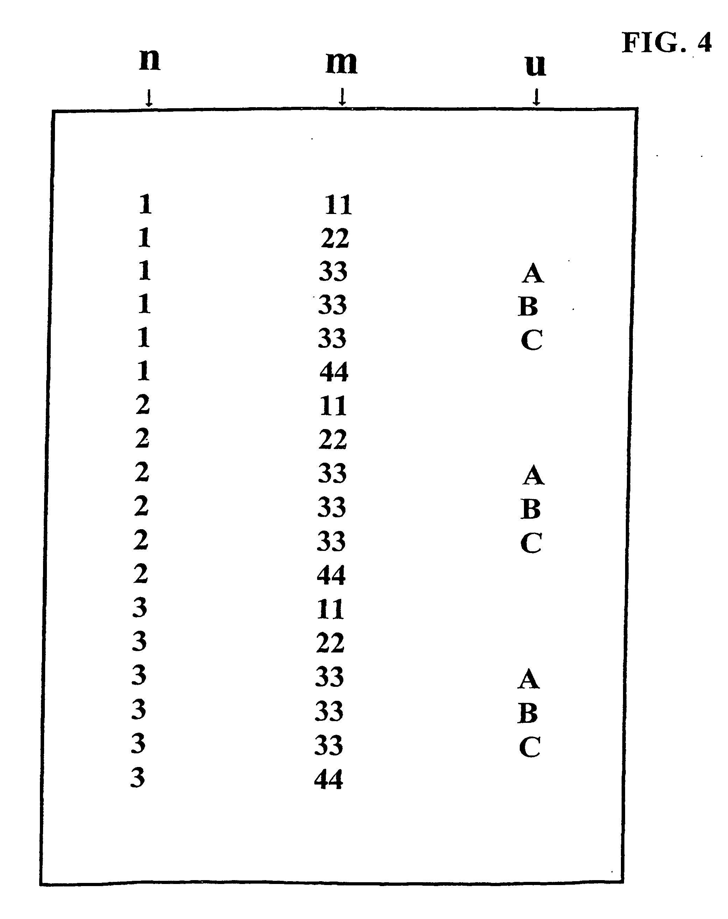

With reference to Figure 4, this can be seen to illustrate a functional increase of the operating modes of the apparatus of the invention as represented in Figure 3, in the sense that, for reasons of space and simplicity, the four lines corresponding to the telephone number 4 in the column "n" are eliminated and, in addition, a further column "u" is added.

In the second column "m" a particular code, ie. the code 33 in the described example, is repeated a number of times, eg. three times, and for each such time a different codification, defined "u" and constituted by the three distinct codifications A, B, and C, is associated to it.

If the code 33 corresponds to the telephone number that is enabled to the spoken message transmission mode, then the possibility becomes readily apparent for the utilization range or scope of the apparatus according to the present invention to be extended dramatically: it will in fact be sufficient to provide it with an adequate memory, ie. storage capacity and adequate operating modalities, along with corresponding actuators and output channels, in order to be able to perform further functions or send more complex commands, by providing an adequate number of further codifications "u".

In fact, by comparing the examples illustrated in Figures 3 and 4 it can be noticed that each telephone apparatus, eg. the telephone apparatus whose "n" number, can increase the number of messages/commands that can be transmitted, by moving from a quantity of four up to a quantity of six (in fact, in Figure 4 there are six lines corresponding to each code listed in the first column "n", which means six possibilities of different commands by calling from any one of the telephone apparatuses 1, 2 or 3).

Furthermore, as this has already been indicated above, such a capability enables the apparatus of the invention to also offer the possibility for the matrixes of data stored in the memory of the same apparatus to be remotely modified: in fact, by using the afore cited channel for the transmission of spoken messages, it is possible, from an appropriately enabled telephone apparatus and by going through a proper guided procedure, for particular DTMF (dual tone multi frequency) codes to be generated and transmitted.

As a matter of fact, the apparatus of the invention may be provided in such a manner as to enable such codes, as appropriately decoded and recognized as having been transmitted by an enabled telephone apparatus, to modify the existing programmed scheme of codes/numbers/enable authorizations, as well as to perform the first set-up of said programmed scheme.

Also apparent is the fact that the described characteristics of receivability of the signals/messages can be retained, albeit with some obvious limitations, even if a telephone apparatus of a stationary telephone network is used in this connection, to the extent to which the same apparatus is capable of receiving messages of the SMS type.

However, this particular aspect of the matter shall not be dealt with any longer here, since it is well-known to those skilled in the art.

The invention can accommodate a further improvement that makes the use thereof still more useful and wider-ranging. This refers to the capability of the apparatus of the invention of being associated to an automatic positioning or location system, for instance of the type that makes use of GPS (global positioning system) modules.

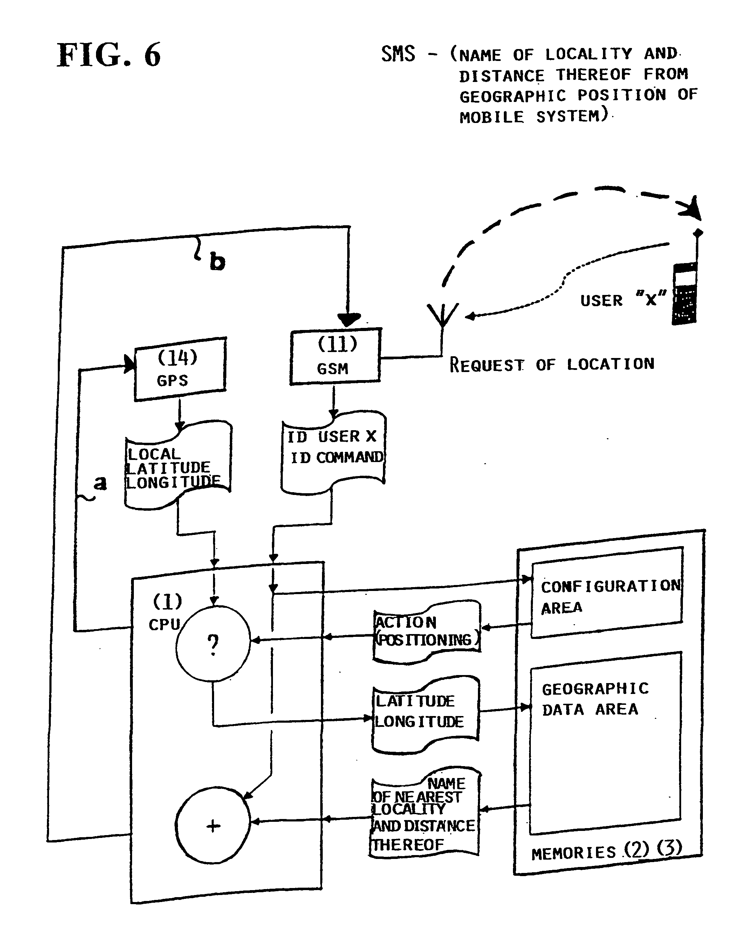

In fact, if the apparatus of the invention is installed in a mobile means, such as a motor-vehicle or the like, and if the latter is provided with a localizing or positioning device (of the GPS type) and this device is suitably connected to one of the input channels of said apparatus of the invention, it will be possible, by providing it with some operating modalities, for the position of the means in which the same apparatus is installed to be transmitted to one or more appropriately adapted receiving apparatuses. This proves particularly useful in view of effectively preventing/fighting any attempt at stealing mobile means or motor-vehicles of any kind and, anyway, automatically following from more receiving apparatuses the route along which one or more of such means provided with an apparatus according to invention are travelling.
This particular improvement of the invention may even be further enhanced through an increment that may be described as follows: with reference to Figure 6, this can be noticed to illustrate a particular configuration of the data flows among modules represented in Figure 1.

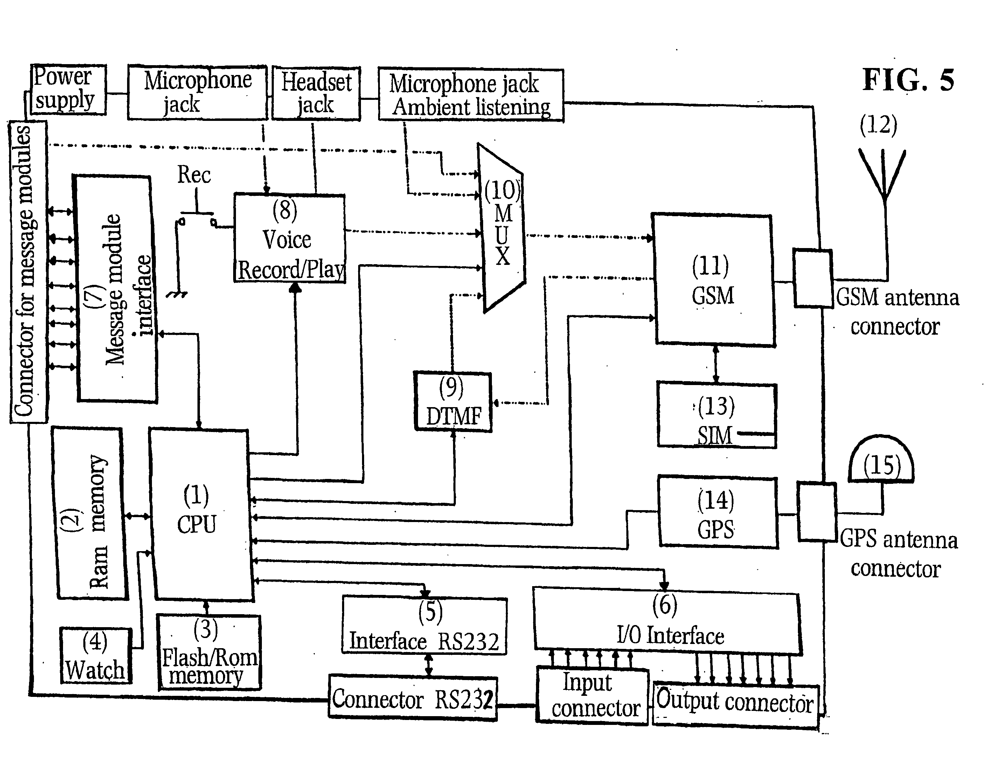

For reasons of greater comprehensibility and descriptive simplicity, some of these modules, along with the related reference numerals, are the same in Figure 6 as those illustrated in Figure 5, so that they shall not be described here.

In particular, the memory array (2, 3) is provided with a so-called "Geographic Data Area" module comprising a database containing the names of pre-set localities associated to the respective geographic co-ordinates. The operation in this particular mode is as follows: when a user "X" sends with its own telephone apparatus, according to the afore described criteria, an appropriate command to the GSM module 11 of the apparatus of the invention, such a command, after having been duly recognized and enabled, is sent to the GPS module 14 via the connection "a". The GPS module performs its function, ie. it produces the geographic co-ordinates of the locality in which the apparatus of the invention, which obviously includes said GPS module, is positioned. These co-ordinates are transmitted to appropriate storage areas in the memory arrays (2, 3) of the apparatus. A scanning and processing procedure is then performed in such storage areas in view of identifying, in the database containing the names of the localities stored therein, the locality which is the nearest one to the geographic spot identified by the GPS module, as well as the distance of said locality from said geographic spot.

This information is then appropriately processed, coded and transmitted again by the CPU module (1), via the connection "b", to the GSM module, which in turn automatically sends this information to the same telephone apparatus of the user "X" by means of a more intelligible message, eg. a SMS message.

The advantage of such a mode of operation and use lies in the possibility for one or more users to be informed automatically, and in a readily intelligible manner, on the fact that the mobile means, eg. motor-vehicle, on which the apparatus of the invention is installed, is positioned at a certain locality that is readily identifiable, or finds itself at a certain distance from a known or identifiable locality, without any need arising for the users themselves to go through complicated searches or tracings that may even require a plurality of different maps.

Finally, the apparatus of the invention may readily and easily be provided with programming modalities from the outside that allow a user to set and store all necessary data, for instance all data pertaining to the matrix for the association of numbers, codes and codifications, to properly set both enable authorizations and non-authorizations, to identify respective input and output channels, and to define and generate appropriate activation signals for the controlled actuators.

However, the manner in which such features can be implemented is generally known in the art, so that it shall not be explained here.

Nor will there be described to any greater detail the construction configuration of the apparatus of the invention, a preferred embodiment of which is illustrated in Figure 5, in which the various component parts and units are described in the following list.

### 1. CPU

Control process unit
   - Software processing
   - Direct control of blocks 5-6-7-8-9-10-11-14
2. Ram Memory
   Ram memory supporting the CPU 1.
3. Flash/Rom Memory
   Flash/Rom memory containing the software for the CPU 1.
4. Watch
   System's clock operating also when the apparatus is switched off.
5. RS232 Interface
   Communication interface of the CPU 1 with external configuration devices.
6. Input/Output Interface
   Input/Output interface for the CPU lto detect, ie. receive signals from and send commands to external devices (detectors, sensors and actuators located in the ambient to be controlled).
7. Message Module Interface
   Interface for controlling externally added modules for phonic messages or acoustic signals.
8. Voice Record/Play
   Internal phonic module for recording and playing voice messages.
9. DTMF
   Device adapted to recognize and generate signals of the DTMF (Dual Tone Multi Frequency) type from and to the telephone line. These signals are sent on command of the CPU 1. When the device 9, in reception mode, recognizes said signals, it communicates them to the CPU 1 directly.
10. Mux
   Multiplexer, ie. selector of the signal to be sent to the telephone line, as selected among the ones coming in from external microphone, external phonic modules, DTMF module 9, voice Record/Play module 8. The selection is made based on the command issued by the CPU 1.
11. GSM
   GSM telephone module provided with data, voice and fax operation functions.
   Phonic signals come in from the module 10 and are then sent to the telephone line. Phonic signals received at this module are sent solely to the module 9. The GSM module 11 is governed solely by the CPU 1 module.
12. GSM Antenna
   Antenna for radio-frequency connecting the device 11 with the GSM network
13. SIM
   SIM telephone card
14. GPS
   Optional satellite-assisted positioning and localizing device. This module receives information signals from the GPS satellite network so as to be able to determine the terrestrial geographic co-ordinates of its own position. The geographic co-ordinates are then made available to the CPU 1.
15. GPS Antenna
   Antenna adapted to receive radio-frequency signals from the GPS satellite network and convey them to the module 14.

## Claims

1. Multi-function apparatus for remotely signaling, controlling and triggering events through the telephone network comprising:
a first multiplicity of output channels (5) capable of being connected to respective external actuators(Al, A2, An);
a second multiplicity of input channels (4) capable of being connected to respective external sensors(S1, S2, Sn);
reception means (2) for receiving telephone calls coming from telephone apparatuses (3) of a mobile or stationary telephone network;
transmission means (6) for transmitting telephone signals to an external mobile or stationary telephone network;
memory means;
processing means (8) associated to said memory means;
**characterized in that** said memory means is arranged to store a plurality of telephone numbers (n) of respective enabled telephone apparatuses (3), a multiplicity of numerical codes (m) each one corresponding to specific pre-determined functions of the apparatus;
and **in that** said processing means (8) are adapted for
identifying , for each telephone call being received, the telephone number (n) of the calling telephone apparatus, and the numerical code (m) sent by said telephone apparatus;
verifying whether the identified telephone number is included among the enabled ones stored in the memory means;
if the identified telephone number is included among the enabled ones, activating the specific pre-determined function associated to the identified numerical code.

2. Multi-function apparatus according to claim 1 wherein said numerical codes (m) correspond to different telephone numbers that a user of a telephone apparatus may dial in order to connect him/herself with the apparatus.

3. Apparatus according to claim 1 or 2, **characterized in that** said memory means also is arranged to store a plurality of enabled associations between each telephone number (n) of a calling telephone apparatus and one or more of the numerical codes, and **in that** said processing means is adapted to verify the association between the identification number of a calling telephone apparatus (n) and the numerical code (m) dialled by the same calling telephone apparatus, and to, if the identified association is included among the enabled ones, activating the specific predetermined function associated to the identified numerical code.

4. Apparatus according to any of the previous claims, **characterized in that** the processing and the activation of the specific pre-determined function can take place without any opening of a telephone channel.

5. Apparatus according to any of the previous claims, **characterized in that** it is adapted to activate said specific pre-determined functions via respective output channels.

6. Apparatus according to any of the previous claims, **characterized in that** it is further arranged that at least one of said numerical codes (m) allows, when dialled transmitted and enabled, a further quantity of codifications (u) to be transmitted to said processing means.

7. Apparatus according to claim 6, **characterized in that** it is further adapted to verify and recognize the associations between one of said numerical codes (m), sent by the calling telephone apparatus, and one of said numerical codifications of said further quantity of codifications (u).

8. Apparatus according to claim 7, **characterized in that** it is adapted to activate pre-determined functions via respective output channels (5) in accordance with the outcome of said verification of said associations between said associations of numerical codes (m) and said codifications of said further quantity of codifications (u).

9. Apparatus according to any of the preceding claims 6 to 8, **characterized in that** at least one of said numerical codes is adapted to represent data of the DTMF type, and that at least one of said pre-determined functions includes the set-up of the data contained in the memory of the apparatus, or the modification of the same data.

10. Apparatus according to any of the preceding claims, **characterized in that** said processing means is adapted to receive and process according to pre-determined modalities the signals received via one of said input channels (4) and generated by at least one of said sensors (S1, S2, Sn), and to consequently transmit, by means of said transmission means, corresponding telephone signals towards pre-defined identification numbers (n) of telephone apparatuses (3) connected to an either mobile or stationary telephone network.

11. Apparatus according to claim 10, **characterized in that** it is arranged that at least one of said corresponding telephone signals is sent to at least a pre-defined electronic mail (e-mail) address.

12. Apparatus according to claim 10, **characterized in that** said corresponding telephone signals include transmission signals generated by at least one of said external actuators (A1, A2, An) comprising a recorder adapted to play prerecorded messages of the voice and/or the SMS type.

13. Apparatus according to claim 10, **characterized in that** said corresponding telephone signals comprise signals adapted to the transmission of SMS messages.

14. Apparatus according to any of the preceding claims, **characterized in that** it is accommodated in a mobile means provided with a positioning device for the automatic location on the earth's surface, and that said processing means is adapted to receive from said positioning device, via one of said input channels (4), a signal that is representative of the current position of said apparatus.

15. Apparatus according to claim 14, **characterized in that** said positioning device is arranged to operate through a satellite network, as GPS.

16. Apparatus according to claim 13, **characterized in that**:
- said memory means is provided with a database containing a plurality of names of localities associated to the respective geographic co-ordinates;
- said processing means is adapted to process the received signal representative of the current position, to perform a scanning and a processing in order to identify, in said database, the name of the locality which is the nearest to said so identified and received current position, and to possibly calculate the distance of said locality from said current position;
- it is adapted to automatically re-transmit this information to a plurality of preselected telephone apparatuses.

17. Apparatus according to claim 16, **characterized in that** said information concerning locality and distance is transmitted through SMS messages.

## Patentansprüche

1. Multifunktionelle Vorrichtung zur Fernsignalisierung,
- steuerung und -verarbeitung von Vorfällen durch das Telefonnetz, enthaltend:
- eine erste Anzahl von Ausgangskanälen (5), geeignet, an jeweilige äussere Stellorgane (A1, A2, An) angeschlossen zu werden;
- eine zweite Anzahl von Eingangskanälen (4), geeignet, an jeweilige äussere Fühler (S1, S2, Sn) angeschlossen zu werden;
- Empfangsmittel (2) zum Empfang von Telefonanrufen, die von Telefonapparaten (3) eines mobilen Telefonnetzes oder eines Festnetzes kommen;
- Übertragungsmittel (6) zur Übertragung von Telefonsignalen an ein äusseren mobiles Telefonnetz oder an ein Festnetz;
- Speichermittel;
- Verarbeitungsmittel (8), die den genannten Speichermitteln zugeordnet sind;
**dadurch gekennzeichnet, dass** die genannten Speichermittel dazu vorgesehen sind, eine Anzahl von Telefonnummern (n) von jeweiligen befähigten Telefonapparaten (3) zu speichern, sowie eine Vielzahl von Nummerncodes (m), jeder entsprechend spezifischen vorgegebenen Funktionen des Apparates;
und **dadurch**, dass die genannten Verarbeitungsmittel (8) verwendet werden zur
- Identifizierung, bei jedem eingehenden Telefonanruf, der Nummer des anrufenden Telefonapparates und des durch den genannten Telefonapparat ausgesandten Nummercodes (m);
- Überprüfung, ob die identifizierte Telefonnummer unter den befähigten, in den Speichermitteln gespeicherten enthalten ist;
- Aktivierung, wenn die identifizierte Telefonnummer unter den befähigten enthalten ist, der spezifischen vorgegebenen Funktion, die dem identifizierten Nummerncode zugeordnet ist.

2. Multifunktionelle Vorrichtung nach Patentanspruch 1, bei welcher die genannten Nummerncodes (m) verschiedenen Telefonnummern entsprechen, die ein Benutzer eines Telefons anwählen kann, um sich mit der Vorrichtung zu verbinden.

3. Vorrichtung nach Patentanspruch 1 oder 2, **dadurch gekennzeichnet, dass** die genannten Speichermittel ebenfalls dazu vorgesehen sind, eine Anzahl von befähigten Verbindungen zwischen jeder Telefonnummer (n) eines rufenden Telefonapparates und einem oder mehreren Nummerncodes zu speichern, und **dadurch**, dass die genannten Verarbeitungsmittel geeignet sind, die Verbindung zwischen der Identifikationsnummer eines rufenden Telefonapparates (n) und einem durch denselben rufenden Telefonapparat angewählten Nummercodes (m) zu überprüfen und, wenn die identifizierte Verbindung unter den befähigten enthalten ist, die spezifische vorgegebene Funktion zu aktivieren, welche dem identifizierten Nummemcode zugeordnet ist.

4. Vorrichtung nach einem beliebigen der vorstehenden Patentansprüche, **dadurch gekennzeichnet, dass** die Verarbeitung und die Aktivierung der spezifischen vorgegebenen Funktion ohne jedes Öffnen eines Telefonkanals erfolgen kann.

5. Vorrichtung nach einem beliebigen der vorstehenden Patentansprüche, **dadurch gekennzeichnet, dass** sie geeignet ist, die genannten spezifischen vorgegebenen Funktionen über jeweilige Ausgangskanäle zu aktivieren.

6. Vorrichtung nach einem beliebigen der vorstehenden Patentansprüche, **dadurch gekennzeichnet, dass** ausserdem vorgesehen ist, dass wenigstens einer der genannten Nummemcodes (m), wenn angewählt, übertragen und befähigt, es einer weiteren Zahl von Kodierungen (u) erlaubt, an die genannten Verarbeitungsmittel übertragen zu werden.

7. Vorrichtung nach Patentanspruch 6, **dadurch gekennzeichnet, dass** sie ausserdem geeignet ist, die Zuordnungen zwischen einem der genannten Nummerncodes (m), ausgesandt durch den rufenden Telefonapparat, und einer der genannten numerischen Kodierungen der genannten weiteren Zahl von Kodierungen (u) zu überprüfen und zu erkennen.

8. Vorrichtung nach Patentanspruch 7, **dadurch gekennzeichnet, dass** sie geeignet ist, vorgegebene Funktionen über jeweilige Ausgangskanäle (5) zu aktivieren, und zwar je nach dem Ergebnis der genannten Überprüfungen der genannten Zuordnungen zwischen den genannten Nummerncodes (m) und den genannten Kodierungen der genannten weiteren Zahl von Kodierungen (u).

9. Vorrichtung nach einem beliebigen der vorstehenden Patentansprüche von 6 bis 8, **dadurch gekennzeichnet, dass** wenigstens einer der genannten Nummemcodes geeignet ist, Daten vom DTMF-Typ darzustellen, und dass wenigstens eine der genannten vorgegebenen Funktionen die Installation der im Speicher der Vorrichtung enthaltenen Daten vorsieht, oder die Änderung der Daten selbst.

10. Vorrichtung nach einem beliebigen der vorstehenden Patentansprüche, **dadurch gekennzeichnet, dass** die genannten Verarbeitungsmittel geeignet sind, nach festgelegten Modalitäten die über einen der genannten Eingangskanäle (4) empfangenen und durch wenigstens einen der genannten Fühler (S1, S2, Sn) erzeugten Signale zu übernehmen und zu verarbeiten, und anschliessend, mit Hilfe der genannten Übertragungsmittel, entsprechende Telefonsignale an die vorgegebenen Identifikationsnummern (n) der Telefonapparate (3) auszusenden, die entweder an ein mobiles Telefonnetz oder an ein Festnetz angeschlossen sind.

11. Vorrichtung nach Patentanspruch 10, **dadurch gekennzeichnet, dass** vorgesehen ist, dass wenigstens eins der genannten entsprechenden Telefonsignale an wenigstens eine bestimmte Elektronikpost-Anschrift (e-mail) gesendet wird.

12. Vorrichtung nach Patentanspruch 10, **dadurch gekennzeichnet, dass** die genannten Telefonsignale Übertragungssignale enthalten, erzeugt durch wenigstens einen der genannten äusseren Stellorgane (A1, A2, An), enthaltend einen Rekorder, der dazu vorgesehen ist, zuvor aufgezeichnete Meldungen vokaler Art und/oder vom Typ SMS wiederzugeben.

13. Vorrichtung nach Patentanspruch 10, **dadurch gekennzeichnet, dass** die genannten entsprechenden Telefonsignale Signale enthalten, die zur Übertragung von SMS-Meldungen geeignet sind.

14. Vorrichtung nach einem beliebigen der vorstehenden Patentansprüche, **dadurch gekennzeichnet, dass** sie in einem mobilen Mittel aufgenommen ist, versehen mit einer Positioniervorrichtung zur automatischen Lokalisierung auf der Erdoberfläche, und dass die genannten Verarbeitungsmittel geeignet sind, von der genannten Positioniervorrichtung über einen der genannten Eingangskanäle (4) ein Signal zu empfangen, welches die augenblickliche Position der genannten Vorrichtung darstellt.

15. Vorrichtung nach Patentanspruch 14, **dadurch gekennzeichnet, dass** die genannte Positioniervorrichtung dazu vorgesehen ist, über ein Satellitennetz, wie GPS, zu arbeiten.

16. Vorrichtung nach Patentanspruch 13, **dadurch gekennzeichnet, dass**:
- die genannten Speichermittel mit einer Datenbank versehen sind, enthaltend eine Anzahl von Ortnamen, die den jeweiligen geographischen Koordinaten zugeordnet sind;
- die genannten Verarbeitungsmittel geeignet sind, das die augenblickliche Position darstellende empfangene Signal zu verarbeiten, eine Abtastung und eine Verarbeitung vorzunehmen, um in der genannten Datenbank den Namen des Ortes zu identifizieren, welcher der genannten, so identifizierten und empfangenen augenblicklichen Position am nächsten liegt, und eine Berechnung des Abstandes des genannten Ortes von der genannten augenblicklichen Position zu ermöglichen;
- geeignet ist, automatisch diese Information erneut an eine Anzahl von vorgewählten Telefonapparaten zu senden.

17. Vorrichtung nach Patentanspruch 16, **dadurch gekennzeichnet, dass** die genannte, den Ort und den Abstand betreffende Information durch SMS-Meldungen übertragen wird.

## Revendications

1. Appareil à fonctions multiples permettant de signaler, contrôler et déclencher des événements à distance via le réseau téléphonique, comprenant:
une première multiplicité de canaux de sortie (5) capables d'être connectés à leurs actionneurs externes respectifs (AI, A2, An);
une deuxième multiplicité de canaux de sortie (4) capables d'être connectés à leurs capteurs externes respectifs (S1, S2, Sn);
un moyen de réception (2) permettant de recevoir des appels téléphoniques provenant d'appareils téléphoniques (3) d'un réseau téléphonique mobile ou fixe;
un moyen de transmission (6) permettant de transmettre des signaux téléphoniques à un réseau téléphonique mobile ou fixe externe;
un moyen de mémorisation;
un moyen de traitement (8) associé audit moyen de mémorisation;
**caractérisé en ce que** ledit moyen de mémorisation est conçu de façon à stocker une pluralité de numéros de téléphone (n) d'appareils téléphoniques activés correspondants (3), une multiplicité de codes numériques (m), correspondant chacun à des fonctions prédéterminées spécifiques de l'appareil;
et **en ce que** ledit moyen de traitement (8) permet de:
identifier, pour chaque appel téléphonique reçu, le numéro de téléphone (n) de l'appareil téléphonique appelant, et le code numérique (m) envoyé par ledit appareil téléphonique;
vérifier si le numéro de téléphone identifié figure parmi ceux stockés sur le moyen de mémorisation;
si le numéro de téléphone identifié figure parmi les numéros activés, activer la fonction prédéterminée spécifique associée au code numérique identifié.

2. Appareil à fonctions multiples selon la revendication 1, dans lequel lesdits codes numériques (m) correspondent aux différents numéros de téléphone qu'un utilisateur d'un appareil téléphonique peut composer pour se connecter à l'appareil.

3. Appareil selon la revendication 1 ou 2, **caractérisé en ce que** ledit moyen de mémorisation stocke est également conçu pour stocker une pluralité d'associations activées entre chaque numéro de téléphone (n) d'un appareil téléphonique appelant et un ou plusieurs des codes numériques, et ce que ledit moyen de traitement permet de vérifier l'association entre le numéro d'identification d'un appareil téléphonique appelant (n) et le code numérique (m) composé par le même appareil téléphonique appelant et, si l'association identifiée figure parmi les associations activées, d'activer la fonction prédéterminée spécifique associée au code numérique identifié.

4. Appareil selon l'une quelconque des revendications précédentes, **caractérisé en ce que** le traitement et l'activation de la fonction prédéterminée spécifique peuvent avoir lieu sans ouverture d'un canal téléphonique.

5. Appareil selon l'une quelconque des revendications précédentes, **caractérisé en ce qu'**il est permet d'activer lesdites fonctions prédéterminées spécifiques via leurs canaux de sortie respectifs.

6. Appareil selon l'une quelconque des revendications précédentes, **caractérisé en ce qu'**il est conçu en outre de tel sorte qu'au moins l'un desdits codes numériques (m) permettre, quand il est composé, transmis et activé, la transmission d'une quantité supplémentaires de codages (u) audit moyen de traitement.

7. Appareil selon la revendication 6, **caractérisé en ce qu'**il est permet en outre de vérifier et de reconnaître les associations entre l'un desdits codes numériques (m), envoyés par l'appareil téléphonique appelant, et l'un desdits codages numériques de ladite quantité supplémentaire de codages (u).

8. Appareil selon la revendication 7, **caractérisé en ce qu'**il permet d'activer des fonctions prédéterminées via leurs canaux de sortie respectifs (5), selon le résultat de ladite vérification desdites associations entre lesdites associations de codes numériques (m) et lesdits codages de ladite quantité supplémentaire de codages (u).

9. Appareil selon l'une quelconque des revendications précédentes 6 à 8, **caractérisé en ce qu'**au moins l'un desdits codes numériques permet de représenter des données du type DTMF, et **en ce qu'**au moins l'une desdites fonctions prédéterminées comprend le paramétrage des données contenues dans la mémoire de l'appareil, ou la modification desdites données.

10. Appareil selon l'une quelconque des revendications précédentes, **caractérisé en ce que** ledit moyen de traitement permet de recevoir et de traiter selon des modalités prédéterminées les signaux reçus via l'un desdits canaux d'entrée (4) et générés par au moins l'un desdits capteurs (S1, S2, Sn) et de transmettre en conséquence, au moyen dudit moyen de transmission, les signaux téléphoniques correspondants vers des numéros d'identification prédéfinis (n) d'appareils téléphoniques (3) connectés à un réseau téléphonique mobile ou fixe.

11. Appareil selon la revendication 10, **caractérisé en ce qu'**il permet qu'au moins l'un desdits signaux téléphoniques correspondants soit envoyé à au moins une adresse de courrier électronique (e-mail).

12. Appareil selon la revendication 10, **caractérisé en ce que** lesdits signaux téléphoniques correspondants comprennent des signaux de transmission générés par au moins l'un desdits actionneurs externes (AI, A2, An) comprenant un dispositif d'enregistrement permettant la lecture de messages préenregistrés de type vocal et/ou SMS.

13. Appareil selon la revendication 10, **caractérisé en ce que** lesdits signaux téléphoniques correspondants comprennent des signaux permettant la transmission de messages SMS.

14. Appareil selon l'une quelconque des revendications précédentes, **caractérisé en ce qu'**il est logé dans un moyen mobile doté d'un dispositif de positionnement permettant la localisation automatique sur la surface terrestre, et **en ce que** ledit moyen de traitement permet de recevoir dudit dispositif de positionnement, via l'un desdits canaux d'entrée (4), un signal représentatif de la position actuelle dudit appareil.

15. Appareil selon la revendication 14, **caractérisé en ce que** ledit dispositif de positionnement est conçu pour fonctionner au moyen d'un réseau satellite tel que GPS.

16. Appareil selon la revendication 13, **caractérisé en ce que**:
- ledit moyen de mémorisation est doté d'une base de données contenant une pluralité de noms de localités associés à leurs coordonnées géographiques respectives;
- ledit moyen de traitement est conçu pour traiter le signal reçu représentatif de la position actuelle, pour effectuer un balayage et un traitement de façon à identifier, dans ladite base de données, le nom de la localité la plus proche de ladite position actuelle ainsi identifiée et reçue, et éventuellement pour calculer la distance de ladite localité à ladite position actuelle;
- il permet de retransmettre automatiquement ces informations à une pluralité d'appareils téléphoniques présélectionnés.

17. Appareil selon la revendication 16, **caractérisé en ce que** lesdites informations concernant la localité et la distance sont transmises par des messages SMS.
